Europäisches Patentamt

European Patent Office

Office européen des brevets

(11) Veröffentlichungsnummer : **0 133 899**
**B1**

(12) **EUROPÄISCHE PATENTSCHRIFT**

(45) Veröffentlichungstag der Patentschrift :
01.02.89

(21) Anmeldenummer : 84107401.6

(22) Anmeldetag : 28.06.84

(51) Int. Cl.⁴ : **C 08 F 18/00**, C 08 F 2/16,
C 09 J 3/14, C 08 F 4/28,
D 21 H 3/38

(54) Verfahren zur Herstellung wässriger Polymerdispersionen und ihre Verwendung.

(30) Priorität : 01.07.83 DE 3323851

(43) Veröffentlichungstag der Anmeldung :
13.03.85 Patentblatt 85/11

(45) Bekanntmachung des Hinweises auf die Patenterteilung : 01.02.89 Patentblatt 89/05

(84) Benannte Vertragsstaaten :
BE CH DE FR GB LI NL

(56) Entgegenhaltungen :
GB—A— 854 191
US—A— 3 769 248
Journal of Polymer Science: Polymer Symposium 72,
161-198 (1985)
Die Akte enthält technische Angaben, die nach dem
Eingang der Anmeldung eingereicht wurden und die
nicht in dieser Patentschrift enthalten sind.

(73) Patentinhaber : WACKER-CHEMIE GMBH
Prinzregentenstrasse 22
D-8000 München 22 (DE)

(72) Erfinder : Brabetz, Hartmut, Dr. Dipl.-Chem.
Ludwig-Thoma-Strasse 29
D-8263 Burghausen (DE)
Erfinder : Eck, Herbert, Dr. Dipl.-Chem.
Burg 11
D-8263 Burghausen (DE)
Erfinder : Jira, Reinhard, Dr. Dipl.-Chem.
Haydnstrasse 13
D-8263 Burghausen (DE)
Erfinder : Hopf, Heinrich
Mehringer Strasse 49a
D-8263 Burghausen (DE)

Jouve, 18, rue St-Denis, 75001 Paris, France

**Beschreibung**

Die Möglichkeit der Verwendung von Stärke oder Stärkederivaten als Schutzkolloid bei der Herstellung wäßriger Polymerdispersionen ist bereits mehrfach vorgeschlagen worden.

Beispielsweise wird in der EP-A 21 542 und in der US-A 37 69 248 jeweils ein Verfahren zur Herstellung wäßriger Vinylacetat-Polymerdispersionen beschrieben, demzufolge das Monomer und der Initiator einer wäßrigen Lösung eines Emulgators und von z. B. Hydroxyethyl- und/oder Hydroxypropylstärke hinzugefügt werden.

Die US-A 36 32 535 beschreibt die Herstellung wäßriger Vinylacetat-Polymerdispersionen in Gegenwart bestimmter oxydierter Stärken. Von der Verwendung anderer Stärkederivate wird ausdrücklich abgeraten, da dabei Produkte mit unbefriedigenden Eigenschaften entstünden.

Da für verschiedene Anwendungen von Polymerdispersionen ein Emulgatorgehalt unerwünscht ist, bestand nun die Aufgabe darin, ein Verfahren zur Herstellung wäßriger Polymerdispersionen zu finden, bei dem auf den Zusatz von Emulgatoren bei der Polymerisation verzichtet werden kann. Außerdem sollte es möglich gemacht werden, auf den oxydativen Abbau von Stärke zu verzichten, trotzdem aber stippen- und koagulatfreie Dispersionen zu erhalten, die die in der Praxis erforderliche Stabilität auch z. B. gegen Boraxlösung besitzen und sich insbesondere für die störungsfreie Verarbeitung in zementhaltigen Massen eignen.

Gegenstand der Erfindung ist demnach ein Verfahren zur Herstellung wäßriger Polymerdispersionen durch Polymerisation von Vinylestern gegebenenfalls zusammen mit bis zu 50 Gew.-% bezogen auf Gesamtgewicht der Monomeren, weiterer ethylenisch ungesättigter Verbindungen mittels freier Radikale liefernder, zumindest teilweise wasserlöslicher Initiatoren bei Reaktionstemperaturen von + 10 bis + 100 ºC in Gegenwart von cyanalkylierter, hydroxyalkylierter und/oder carboxymethylierter Stärke und gegebenenfalls weiterer üblicher Zusatzstoffe unter Vorlage von höchstens einem Drittel der Gesamtmonomeren und Dosierung des Rests der Monomeren während der Polymerisation, dadurch gekennzeichnet, daß als Initiatoren, gegebenenfalls in Kombination mit wasserlöslichen Reduktionsmitteln, Wasserstoffperoxid und/oder organische Hydroperoxide in Mengen von mindestens 30 mmol je kg des gesamten Monomeren (gemisches) und die modifizierte Stärke in Mengen von mindestens 1 Gew.-%, bezogen auf Gesamtgewicht der Monomeren (gemisches), verwendet werden und die Polymerisation in Abwesenheit von Emulgator durchgeführt wird.

Erfindungsgemäß lassen sich Vinylester gesättigter $C_1$- bis $C_{19}$-Alkylcarbonsäuren, insbesondere Vinylacetat, gegebenenfalls mit weiteren Comonomeren, z. B. (Meth-)Acrylsäureestern mit verzweigten oder unverzweigten gesättigten $C_1$- bis $C_{18}$-Alkoholen, (Meth-) Acrylnitril, weiteren Vinyl- oder Allylestern von aliphatischen, araliphatischen oder aromatischen $C_1$- bis $C_{19}$-Carbonsäuren, $C_2$- bis $C_4$-Alkenen und Vinylhalogenide polymerisieren.

Die Vinylester der gesättigten Alkylcarbonsäuren können einzeln oder im gemisch, gegebenenfalls auch mit weiteren Monomeren, insbesondere mit Alkenen, wie Ethylen, Propylen, Isobutylen, aber auch z. B. mit Acryl-, Methacryl-, Croton-, Itakon-, Fumar- und Maleinsäure, sowie insbesondere deren Mono- und/oder Diestern mit den oben genannten Alkoholen, deren Amiden oder Nitrilen (co)polymerisiert werden.

Auch Vinylsulfonate, Monoester von Di- oder Polyhydroxylverbindungen mit (Meth-) Acrylsäure oder Crotonsäure, N-Vinyl-2-pyrrolidon, Vinylpyridin, N-Vinyllactone, Vinyl- oder Allyl(di-) acetylacetat, Vinyl- oder (Meth-) Acryloylalkoxysilane ; Vinyl- oder Allylverbindungen von Glycidylalkohol, alpha-Chloralkylcarbonsäuren und Dichlortriazinen, sowie olefinisch ungesättigten N-Methylolamide, z. B. N-Methylol(meth) acrylamid, N-Methylolallylcarbamat, N-Methylolallylether, Mannichbasen, N-Methylolester und -ether von N-Methylol(meth) acrylamid können als Comonomere eingesetzt werden.

Als bi- oder polyfunktionelle Comonomere seien beispielsweise die folgenden Verbindungen genannt :

Divinyl- und Diallylether von Glykolen, Divinyl- und diallylester von gesättigten Dicarbonsäuren, Polyvinyl- und Polyallylester von Polycarbonsäuren, Di- und Polyester von Di- und Polyhydroxyverbindungen mit (Meth-) Acrylsäure, Vinyl- und Allylester der (Meth-) Acryl-, Croton-, Malein- und Fumarsäure und Divinylbenzol.

Die erwähnten Comonomeren können, soweit es die Copolymerisationsparameter und die gewünschten Eigenschaften der Dispersion bzw. des Copolymerisats zulassen, mit den eingangs genannten Monomeren oder deren Gemischen copolymerisiert werden. Ihre Gesamtmenge übersteigt jedoch nicht 50 Gew.-% des Monomerengesamtgewichts. Vorzugsweise beträgt die Menge der wasserlöslichen und funktionellen Comonomeren höchstens 10 Gew.-% des Monomerengemisches.

Als bevorzugte Beispiele für die Monomeren, die sich erfindungsgemäß (co)polymerisieren lassen, seien genannt :

als Vinylester der Alkylcarbonsäuren : Vinylacetat, Vinylpropionat, Vinylhexanoat, Vinyllaurat, Vinylstearat, Vinylester von in α-Stellung verzweigten Alkylcarbonsäuren, die nach der sogenannten Koch-Synthese hergestellt werden (Ester der Versatic [(R)]-säuren, Shell AG) ;

als weitere Comonomere : Methyl(meth) acrylat, Ethyl(meth) acrylat, Propyl(meth) acrylat, Butyl(meth) acrylat, Ethylhexyl(meth) acrylat, Lauryl(meth) acrylat, Cyclobutadien, Vinylidenchlorid, Vinylformiat,

2

Vinylbenzoat; die den oben genannten Vinylestern entsprechenden Allylestern, Vinylfluorid, Vinylchlorid und Vinylbromid.

Als freie Radikale liefernde, zumindest teilweise wasserlösliche Initiatoren, die vorzugsweise in Kombination mit wasserlöslichen Reduktionsmitteln als Redox-Initiatorsystem eingesetzt werden, eignen sich Wasserstoffperoxid und/oder organische Hydroperoxide ; bevorzugt werden Alkyl- und/oder Aralkylhydroperoxide verwendet. Namentlich zu nennen sind : Isopropylhydroperoxid, tert.-Butylhydroperoxid, Cumolhydroperoxid, Diisopropylphenylhydroperoxid, Pinanhydroperoxid, p-Nitrocumolhydroperoxid, p-tert.-Butylphenylhydroperoxid, tert.-Amylhydroperoxid, 2,5-Dimethylhexan-2,5-dihydroperoxid.

Als bevorzugte Reduktionsmittel sind reduzierende Schwefelverbindungen, insbesondere Salze der Sulfoxylsäure und der schwefeligen Säure, sowie Ascorbinsäure zu nennen. Als einzelne Schwefelverbindungen sind Natrium- und Zinkformaldehydsulfoxylat, Natriumbisulfit und Natriumsulfit zu nennen.

Die genannten Oxydations- und Reduktionsmittel können jeweils einzeln oder als Gemische verwendet werden. Vorzugsweise wird die Oxydationskomponente gegenüber der Reduktionskomponente im Überschuß eingesetzt. Dies kann z. B. dadurch geschehen, daß das Oxydationsmittel ganz oder teilweise vorgelegt wird, während das Reduktionsmittel und gegebenenfalls der Rest der Oxydationskomponente vorzugsweise im Maße ihres Verbrauches während der Polymerisation dosiert werden.

Selbstverständlich können aber auch beide Komponenten eines Redox-Systems dosiert werden. Der peroxidische Initiator wird in Mengen von mindestens 30 mmol, vorzugsweise mindestens 45 mmol, bezogen auf 1 kg des gesamten Monomeren (gemisches), eingesetzt. Die Menge des gegebenenfalls mitverwendeten Reduktionsmittels beträgt vorzugsweise 15 bis 95 Mol-%, insbesondere 15 bis 80 Mol-%, bezogen auf peroxidische Verbindung(en).

Als Reaktionsgemisch werden hier das Wasser und darin gelöste oder dispergierte Reaktionskomponenten und Verbindungen bezeichnet.

Die Obergrenze der Konzentration des Initiators richtet sich nach Art der eingesetzten Monomeren und insbesondere nach der gewählten Reaktionstemperatur und dem beabsichtigten Polymerisationsgrad. Auch das Schutzkolloid hat einen gewissen Einfluß auf die zu verwendende Menge des Initiators. Der Fachmann kann die optimalen Mengen jedoch in einigen wenigen Vorversuchen ohne Schwierigkeiten ermitteln. Im allgemeinen werden 2 Gew.-%, bezogen auf die Gesamtmenge der Monomeren genügen.

Als Schutzkolloide werden einzeln oder im Gemisch miteinander Cyanalkyletherstärken, Hydroxyalkyletherstärken, z. B. Hydroxyethyl-, Hydroxypropyl- und Hydroxybutyletherstärken, und/oder carboxymethylierte Stärken, eingesetzt. Als Ausgangsprodukte für die genannten Stärken lassen sich sowohl abgebaute, z. B. durch saure Hydrolyse abgebaute, als auch native Stärken einsetzen.

Bei der Wahl dieser Ausgangsprodukte brauchen im allgemeinen keine besonderen Anforderungen beachtet zu werden. So können praktisch alle Stärken pflanzlicher Herkunft eingesetzt werden, z. B. solche aus Mais, Weizen, Kartoffeln, Tapioka, Reis, Sago und Sorghum-Hirse.

Die Cyanalkylierung, Hydroxyalkylierung und Carboxymethylierung sind an sich bekannte Verfahren und brauchen deshalb hier nicht eingehender beschrieben zu werden. Auch die Substitutionsgrade sind nicht entscheidend für die Erfolge des Verfahrens, so genügen vielfach solche bis ca. 2.

Viele der einsetzbaren Stärkederivate gibt es als Handelsprodukte auf dem Markt.

Bei der Anwendung der erfindungsgemäß hergestellten Dispersionen in žementhaltigen Massen werden vielfach die mit Hydroxyalkyletherstärken hergestellten bevorzugt.

Die vorstehend beschriebenen Schutzkolloide auf der Basis der modifizierten Stärken werden erfindungsgemäß in Mengen von mindestens 1 Gew.-%, vorzugsweise mindestens 1,5 Gew.-%, bezogen auf das Gesamtgewicht des Monomeren (gemisches), eingesetzt. Vorzugsweise werden mindestens 0,5 Gew.-% dieser Schutzkolloide, bezogen auf Gesamtmonomer, insbesondere die für die Stabilisierung des gesamten Ansatzes erforderliche Mindestmenge an modifizierter Stärke bereits vor Polymerisationsbeginn dem Reaktionsgemisch zugesetzt. Durch die Menge des vorgelegten Schutzkolloids kann in bequemer Weise die Viskosität der fertigen Dispersion bei gegebenen Schutzkolloid und gegebener Temperatur gesteuert werden, z. B. kann durch Vorlage der Gesamtmenge der Stärke die Viskosität stark erhöht oder durch Erhöhung der dosierten Menge des Schutzkolloids abgesenkt werden.

Die Obergrenze der Schutzkolloidmenge wird praktisch nicht durch das erfindungsgemäße Polymerisationsverfahren, sondern durch den Einsatzzweck der fertigen Dispersionen gesetzt. Natürlich setzt auch die Viskosität der Stärke der einsetzbaren Menge Grenzen. Dies wird z. B. daraus ersichtlich, daß diese Grenze beim Einsatz von Knetern für die Polymerisation weiter hinausgeschoben werden kann.

« Hochviskose » Typen der modifizierten Stärken können z. B. vorzugsweise bis 5 Gew.-%, insbesondere bis 3 Gew.-%, sehr niederviskose Typen hingegen z. B. vorzugsweise bis 100 Gew.-%, insbesondere bis 50 Gew.-%, bezogen auf Gesamtmonomergewicht, eingesetzt werden. Schutzkolloide mit dazwischen liegenden Viskositäten können dementsprechend in Mengen von vorzugsweise 1,5 bis 50 Gew.-% verwendet werden.

Manche Typen der modifizierten Stärken sind bekanntermaßen polymerisationshemmend. Sie werden vorzugsweise vermieden oder nur in untergeordneten Mengen eingesetzt. Es empfiehlt sich, die Eignung in einem kleinen Vorversuch zu testen.

Das erfindungsgemäße Polymerisationsverfahren wird bei 10 bis 100 °C, vorzugsweise 35 bis 80 °C, und vorzugsweise bei Drucken bis 200 bar durchgeführt. Wird kein Ethylen eingesetzt, wird die Polymerisation vorzugsweise höchstens beim autogenen Druck der Monomeren bei der jeweiligen Reaktionstemperatur durchgeführt. Beim Einsatz von Ethylen genügen in einer besonders bevorzugten Ausführungsform Drucke von bis 100 bar.

Sofern Ethylen mitpolymerisiert wird, kann es zur Gänze vorgelegt oder teilweise dosiert werden. Vorzugsweise wird ein bestimmter gewünschter Druck vor der Polymerisation eingestellt und dann gegebenenfalls durch Nachdrücken von Ethylen über die Polymerisation konstant gehalten. Natürlich kann der Ethylendruck während der Polymerisationsreaktion auch variiert werden, sofern dies z. B. zur Herstellung von Polymerisaten unterschiedlicher Zusammensetzung gewünscht wird.

Die anderen Monomeren, bzw. Comonomeren werden zu höchstens 1/3 der Gesamtmenge vorgelegt, der Rest wird während der Polymerisation, vorzugsweise im Maße des Verbrauches dosiert. Die Zugabe kann getrennt, als Gemisch und/oder als Voremulsion erfolgen.

Es hat sich weiterhin als vorteilhaft erwiesen, die Gesamtmonomerenkonzentration dieser anderen Monomeren im Reaktionsgemisch unter 20 Gew.-%, weiter bevorzugt bei höchstens 15 Gew.-%, bezogen auf das Gesamtgewicht des Reaktionsgemisches, zu halten. Sofern Ethylen copolymerisiert wird, insbesondere wenn Copolymere mit mehr als 10 Gew.-% einpolymerisierter Ethyleneinheiten angestrebt sind, wird die Gesamtkonzentration dieser anderen Comonomeren, d. h. ungesättigter Ester, halogensubstituierter Ethylene usw., besonders vorzugsweise bei höchstens 10 Gew.-%, insb. höchstens 5 Gew.-%, bezogen auf das Gesamtgewicht des Reaktionsgemisches gehalten. Die Monomeren können getrennt, gemischt und/oder als Voremulsion zugegeben werden.

Als weitere übliche Zusatzstoffe werden gegebenenfalls Molekulargewichtsregler, Puffersubstanzen, mit den modifizierten Stärken verträgliche Schutzkolloide wie Polyvinylalkohole (teilverseiftes Polyvinylacetat), Cellulosederivate, Polyvinylpyrrolidon, Guarprodukte, Alginate in den üblichen Mengen eingesetzt. Allerdings werden diese Dispergierhilfsstoffe und Dispersionsstabilisatoren, sofern überhaupt, vorzugsweise erst der fertigen Dispersion nach Ende der Polymerisation zugesetzt, da sie sonst vielfach in unerwünschter Weise in die Polymerisation eingreifen oder die Produkte in unerwünschter Weise modifizieren können.

Nach Ende der Polymerisation können auch andere übliche Zusätze in die erfindungsgemäß hergestellten Dispersionen in üblichen Mengen eingebracht werden. Als Beispiele hierfür seien Filmbildungshilfsstoffe, Weichmacher, Pesticide, Emulgatoren, Stabilisatoren gegen thermische oder elektromagnetische Schädigung u. a. m. genannt.

Die erfindungsgemäß hergestellten Dispersionen können als solche z. B. zur Herstellung von Klebstoffen, wie insbesondere Papier-, Folien-, (wasserfesten) Holzleimen, als Farb-, Textil- oder Papierhilfsmittel, in der Bauindustrie, z. B. als Zusatz zu hydraulisch abbindenden Massen, verwendet werden.

Die Polymerisate können aber z. B. auch ausgefällt werden oder nach einem anderen bekannten Verfahren isoliert werden.

Die folgenden Versuche sollen das erfindungsgemäße Verfahren weiter erläutern. Die Mengen und Konzentrationen beziehen sich, sofern nicht anders angegeben, auf das Gewicht. Die Prozent-Angaben der Mengen der Komponenten der Initiator-systeme, der Monomeren und der Stärke (derivate) beziehen sich jeweils auf das Gesamtgewicht der Monomeren (ohne Ethylen), die des Festgehaltes und der Restmonomeren auf das Gesamtgewicht der Dispersionen. Der Naßrückstand ist in Gramm/1,5 kg-Ansatz angegeben. Die mittlere Teilchengröße wurde mit Nanosizer in nm gemessen und ist nach der Teilchengrößeverteilung angegeben. Die Viskositäten wurden mit einem Epprecht-Rheometer (Becher und Meßstufe angegeben), bzw.* einem Brookfield-Viskosimeter (min$^{-1}$/mPas) gemessen.

Allgemeine Vorschrift für die Beispiele 1-9 und Vergleichsversuch A-D

In einem zylindrischen Reaktionsgefäß mit Ankerrührer, Rückflußkühler, Thermometer und Zulaufgefäßen für Initiator, Monomer (engemisch) und Pufferlösung, sowie einem Stutzen zur Entnahme von Proben wurden Wasser, Stärke, gegebenenfalls Teile des Katalysators-Systems, gegebenenfalls ein Teil der Monomeren und gegebenenfalls Zusatzstoffe vorgelegt, unter Rühren auf Reaktionstemperatur gebracht und der Rest der Monomeren, des Katalysator-Systems und Puffer in etwa 2 Stunden zudosiert. Nach Ende der Polymerisation wurde gegebenenfalls noch 1/2 Stunde in üblicher Weise unter weiterem Zusatz wasserlöslichen Initiators nachpolymerisiert.

Die Dosierung der Monomeren (abgesehen von Ethylen) wurde so eingestellt, daß die Konzentration der Monomeren im Reaktionsgemisch zwischen 5 und 10 Gew.-% gehalten wurde.

Die Einzelheiten der Beispiele sind der folgenden Tabelle zu entnehmen. Die dabei verwendeten Abkürzungen bedeuten:

v vorgelegt
AA Acrylamide
AAA Allylacetoacetat
AB Acrylsäurebutylester
AS Acrylsäure
F.G. Festgehalt
TBHP tert.-Butylhydroperoxid
DTBP Di-tert, -butylperoxid APS Ammoniumpersulfat
LPO Dilauroylperoxid
d dosiert
MA Methylacrylat
OA 2-Ethylhexylacrylat
VA Vinylacetat
Veo VeoVa(R)10, Vinylversatat(R)
R. M. Restmonomergehalt
$H_2O_2$ Wasserstoffperoxid
CHP Cumylhydroperoxid
NFS Natriumformaldehydsulfoxylat
NS Natriumsulfit

Es wurden handelsübliche modifizierte Stärken eingesetzt :

I : Mischung aus ca. 65 % einer cyanethylierten und aus ca. 35 % einer hydroxyethylierten Kartoffelstärke, deren Substitutionsgrad jeweils bei 0,04-0,05 lag ; Perfectamyl A 6954 ; Avebe
II : Hydroxypropyletherstärke, Substitutionsgrad ca. 1 ; HP 68 ; Amylum
III : Kaltwasserlöslicher Maisstärkeether, Substitutionsgrad ca. 0.5 ; Lab 302 ; Roquette
IV : Carboxymethylstärke, Substitutionsgrad ca. 0,3 ; Versuchsprodukt CMA ; Amylum
V : Carboxymethylstärke, Substitutionsgrad ca. 0,3 ; Avetex CM 34 ; Avebe.

(Siehe Tabelle Seite 6 ff.)

| Nr. | Monomere (%) | Stärketype (%) | | Katalysatorsystem (%) | T (°C) | pH |
|---|---|---|---|---|---|---|
| 1 | VA; d | I | (5v) | TBHP(1v),NFS+FS(je 0.4d) | 70 | 4.3 |
| 2 | VA (98) + AAA (2); d | II | (3v) | TBHP(1v),NFS+FS(je 0.3d) | 70 | 4.6 |
| 3 | VA; d | I | (3v) | TBHP(0.9v),NFS+FS(je 0.3d) | 70 | 5.1 |
| 4 | VA; d | III | (3v) | TBHP(0.9v),NFS+FS(je 0.3d) | 70 | 5.3 |
| 5 | VA; d | IV | (4v) | TBHP(0.9v),NFS+NS(je 0.3d) | 70 | 4.2 |
| 6 | VA; d | IV V | (1.5v)+ (0.5v) | TBHP(0.9v),NFS+NS(je 0.2d) | 70 | 5.4 |
| 7 | VA (80) + AB (20); d | I | (4v) | $H_2O_2$ (0.3v),NFS+FS(je 0.2d) | 70 | 4.1 |
| 8 | VA(60)+AB(20)+MA(13)+ Veo(5)+AS(1)+AA(1); d | I | (2v) | CHP (1v),NFS+FS (je 0.3d) | 70 | 5.3 |
| A | VA (95) + OA (5); d | V | (4v) | APS (0.4v) | 78 | – |
| B | VA (95) + OA (5); d | V | (1v) | APS (0.4v) | 70 | 4.8 |
| 9 | VA (95) + OA (5); d | V | (1v) | TBHP(0.9v),NFS-NS(je 0.3d) | 70 | 4.0 |
| C | VA; d | III | (3v) | LPO (1v) | 60 | 6.0 |
| D | VA; d | III | (3v) | DTBP(1v),NFS+NS(je 0.4d) | 70 | 5.5 |

Tabelle (Fortsetzung)

| Nr. | FG (%) | R.M. (%) | Aufstrich | Teilgr. Vtlg/ (nm) | Viskosität (mPas) | (mPas) | (mPas) |
|---|---|---|---|---|---|---|---|
| 1 | 49.3 | 0.17 | sehr klar | 6/600 | DI 32840 | DII 12990 | DIII 5620 |
| 2 | 45.1 | 0.4 | leicht trüb | – | – | – | DIII 5250 |
| 3 | 47.4 | 0.27 | sehr klar | 6/620 | CI 16530 | CII 6750 | CIII 3000 |
| 4 | 52.4 | 0.2 | klar | 0/745 | CI 154500 | CII 51900 | CIII 32000 |
| 5 | 53.5 | 0.5 | klar | 2/740 | CI 18900 | CII 6460 | CIII 4210 |
| 6 | 45.6 | 6.6 | sehr klar | | | | |
| 7 | 52.4 | 1.0 | sehr klar | – | *2/ 890 | *10/ 590 | – |
| 8 | 47.9 | 0.5 | klar | – | *2/ 780 | *10/ 620 | *20/ 430 |
| A | 51.0 | 0.1 | stippig | stark rheopex | | | |
| B | 50.7 | 0.2 | stippig und koagulathaltig | | | | |
| 9 | 51.3 | 0.3 | klar | | BI 1300 | BII 670 | BIII 370 |
| C | | | typische Suspensionspolymerisation | | | | |
| D | | | typische Suspensionspolymerisation | | | | |

## Patentansprüche

1. Verfahren zur Herstellung wäßriger Polymerdispersionen durch Polymerisation von Vinylestern gegebenenfalls zusammen mit bis zu 50 Gew.-%, bezogen auf das Gesamtgewicht der Monomeren, weiterer ethylenisch ungesättigter Verbindungen mittels freie Radikale liefernder, zumindest teilweise wasserlöslicher Initiatoren bei Reaktionstemperaturen von +10 bis +100 °C in Gegenwart von cyanalkylierter, hydroxyalkylierter und/oder carboxymethylierter Stärke und gegebenenfalls weiterer üblicher Zusatzstoffe unter Vorlage von höchstens einem Drittel der Gesamtmonomeren und Dosierung des Restes der Monomeren während der Polymerisation, dadurch gekennzeichnet, daß als Initiatoren, gegebenenfalls in Kombination mig wasserlöslichen Reduktionsmitteln, Wasserstoffperoxid und/oder organische Hydroperoxide in Mengen von mindestens 30 mmol je kg des gesamten Monomeren (gemisches) und die modifizierte Stärke in Mengen von mindestens 1 Gew.-%, bezogen auf Gesamtgewicht des Monomeren (gemisches), verwendet werden und die Polymerisation in Abwesenheit von Emulgator durchgeführt wird.

2. Verfahren nach Anspruch 1, dadurch gekennzeichnet, daß die peroxidischen Initiatoren in Kombination mit reduzierenden Schwefelverbindungen oder Ascorbinsäure eingesetzt werden.

3. Verfahren nach Anspruch 1 oder 2, dadurch gekennzeichnet, daß als peroxidische Initiatoren Alkyl- und/oder Aralkylhydroperoxide verwendet werden.

4. Verfahren nach einem der Ansprüche 1-3, dadurch gekennzeichnet, daß der peroxidische Initiator vorgelegt und die Polymerisation durch die Zugabe des Reduktionsmittel gesteuert wird.

5. Verfahren nach einem der Ansprüche 1-4, dadurch gekennzeichnet, daß die Stärke (derivate) in einer Menge von mindestens 0,5 Gew.-%, bezogen auf das Monomer (engemisch) vor Polymerisationsbeginn dem Reaktionsgemisch zugesetzt wird (werden).

6. Verwendung der Dispersionen, hergestellt nach einem der vorangehenden Ansprüche, zur

7

Herstellung von Klebstoffen, als Farb-, Textil- oder Papierhilfsmittel oder in hydraulisch abbindenden Massen.

## Claims

1. Process for the preparation of aqueous polymer dispersions by polymerization of vinyl esters, if appropriate together with up to 50 % by weight, based on the total weight of the monomers, of other ethylenically unsaturated compounds by means of initiators which supply free radicals and are at least partly water-soluble, at reaction temperatures of + 10 to + 100 °C in the presence of cyanoalkylated, hydroxyalkylated and/or carboxymethylated starch and if appropriate other customary additives, taking not more than one third of the total monomers and metering in the remainder of the monomers during the polymerization, characterized in that hydrogen peroxide and/or organic hydroperoxides are used as the initiators, if appropriate in combination with water-soluble reducing agents, in amounts of at least 30 mmol per kg of the total monomer (mixture), and the modified starch is used in amounts of at least 1 % by weight, based on the total weight of the monomer (mixture), and the polymerization is carried out in the absence of an emulsifier.

2. Process according to Claim 1, characterized in that the peroxidic initiators are used in combination with reducing sulphur compounds or ascorbic acid.

3. Process according to Claim 1 or 2, characterized in that alkyl and/or araylkyl hydroperoxides are used as peroxidic initiators.

4. Process according to one of Claims 1-3, characterized in that the peroxidic initiator is taken and the polymerization is controlled by the addition of the reducing agent.

5. Process according to one of Claims 1-4, characterized in that the starch (derivative) is (are) added to the reaction mixture in an amount of at least 0.5 % by weight, based on the monomer (mixture), before the start of polymerization.

6. Use of the dispersions prepared according to one of the preceding claims for the preparations of adhesives as colour, textile of paper auxiliaries or in hydraulically setting compositions.

## Revendications

1. Procédé pour préparer des dispersions aqueuses de polymère, par polymérisation d'esters vinyliques éventuellement avec jusqu'à 50 % en poids, sur la base du poids total des monomères, d'autres composés à insaturation éthylénique, à l'aide d'amorceurs au moins partiellement hydrosolubles, fournissant des radicaux libres, à des températures de réaction de + 10 à + 100 °C, en présence d'amidon cyanalkylé, hydroxyalkylé et/ou carboxyméthylé, et éventuellement d'autres additifs usuels, en plaçant au préalable un tiers au maximum du total des monomères et en introduisant de façon dosée le reste des monomères et en introduisant de façon dosée le reste des monomères pendant la polymérisation, procédé caractérisé en ce qu'on utilise comme amorceurs, éventuellement en combinaison avec des réducteurs hydrosolubles, le peroxyde d'hydrogène et/ou des hydroperoxydes organiques, en des quantités d'au moins 30 mmoles/kg (du mélange) des monomères totaux et l'amidon modifié en des quantités d'au moins 1 % en poids, sur la base du poids total (du mélange) des monomères, et en ce qu'on conduit la polymérisation en l'absence d'un émulsifiant.

2. Procédé selon la revendication 1, caractérisé en ce qu'on utilise les amorceurs peroxydiques en combinaison avec des composés soufrés réducteurs ou avec l'acide ascorbique.

3. Procédé selon la revendication 1 ou 2, caractérisé en ce qu'on utilise comme amorceurs peroxydiques des hydroperoxydes d'alkyle et/ou d'aralkyle.

4. Procédé selon l'une quelconque des revendications 1 à 3, caractérisé en ce qu'on place tout d'abord l'amorceur peroxydique et l'on règle la polymérisation grâce à l'addition du réducteur.

5. Procédé selon l'une quelconque des revendications 1 à 4, caractérisé en ce qu'on ajoute au mélange réactionnel l'amidon (ou les dérivés d'amidon) en une quantité représentant au moins 0,5 % en poids, sur la base du monomère (ou du mélange des monomères), avant le début de la polymérisation.

6. Utilisation des dispersions, préparées selon l'une quelconque des revendications précédentes, pour fabriquer des adhésifs, comme adjuvants pour colorants, peintures ou teintures, pour adjuvants pour textiles ou pour papiers, ou dans des compositions à prise hydraulique.